Europäisches Patentamt

European Patent Office

Office européen des brevets

(19)

(11) Veröffentlichungsnummer: **0 038 067
B1**

(12) # EUROPÄISCHE PATENTSCHRIFT

(45) Veröffentlichungstag der Patentschrift:
27.11.85

(21) Anmeldenummer: 81102826.5

(22) Anmeldetag: 13.04.81

(51) Int. Cl.⁴: **G 09 G 1/02,** G 09 G 1/28,
G 06 K 9/00, H 04 N 1/46

(54) Verfahren und Anordnung zum Erfassen von mit graphischen Mustern und Zeichen versehenen Vorlagen.

(30) Priorität: 15.04.80 DE 3014462

(43) Veröffentlichungstag der Anmeldung:
21.10.81 Patentblatt 81/42

(45) Bekanntmachung des Hinweises auf die Patenterteilung:
27.11.85 Patentblatt 85/48

(84) Benannte Vertragsstaaten:
CH FR GB IT LI NL

(56) Entgegenhaltungen:
US - A - 3 679 818

IBM TECHNICAL DISCLOSURE BULLETIN, Band 18, Nr.
7, Dezember 1975, Seite 2304, New York (USA);
G.M.GIDDINGS et al.: "Realtime creation of graphic art
productions from text, vectors and images."
IEEE TRANSACTIONS ON COMPUTERS, Band C-20, Nr.
12, Dezember 1971, Seiten 1527-1543; R.N.ASCHER et
al.: "An interactive system for reading unformatted
printed text."
telecom report 2 (1979) Heft 4, Seiten 215-222

(73) Patentinhaber: **Siemens Aktiengesellschaft, Berlin und
München Wittelsbacherplatz 2, D-8000 München 2 (DE)**

(72) Erfinder: **Popp, Otmar, Willibaldstrasse 148,
D-8000 München 21 (DE)**

**Beschreibung**

Die Erfindung bezieht sich auf ein Verfahren zum Erfassen einer mit einem graphischen Muster und Zeichen versehenen Vorlage gemäss dem Oberbegriff des Patentanspruchs 1. Weiterhin bezieht sich die Erfindung auf eine Anordnung zur Durchführung des Verfahrens.

Aus einer Veröffentlichung von Schirenbeck, G. und Tantow, R.: Endeinrichtungen für den Dienst «Bildschirmtext», Telcom-Report 2 (1979), Heft 4, Seiten 215 bis 222 ist eine Editiereinrichtung bekannt, die zum Erfassen von mit graphischen Mustern und Zeichen versehenen Vorlagen für den Dienst «Bildschirmtext» dient. Bei dieser bekannten Editiereinrichtung ist eine optoelektronische Abtasteinrichtung für die Abtastung von graphischen Mustern und eine Editiertastatur zum Korrigieren und Redigieren und zum Eingeben von einfachen graphischen Mustern vorgesehen.

Die Eingabe von graphischen Mustern mit Hilfe dieser Tastatur ist verhältnismässig aufwendig und wird in erster Linie nur dann durchgeführt, wenn wenig graphische Muster eingegeben werden. Einfacher und zeitsparender ist es, die graphischen Muster gleich farbig in eine Vorlage einzuzeichnen und bei der Abtastung mit der Abtasteinrichtung die Farberkennung, die Zuordnung zu vorgegebenen Graphikfeldern und die Codierung in einem entsprechenden Code in einem einzigen maschinellen Arbeitsgang durchzuführen. Falls zu den graphischen Mustern erklärende alphanumerische Texte darzustellen sind, wäre es denkbar, jedoch aufwendig, eine Zeichenkennung durchzuführen und in einem Zeichengenerator gespeicherte Zeichen anstelle der abgetasteten Zeichen an einer Ausgabeeinheit, beispielsweise einem Bildschirm, darzustellen. Andererseits wäre es denkbar, neben der Vorlage mit den graphischen Mustern eine weitere Vorlage mit den entsprechenden Texten zu verwenden und nach der Erfassung des graphischen Musters nachträglich mittels der Tastatur die alphanumerischen Zeichen einzutragen. Auch ein derartiges Verfahren wäre verhältnismässig aufwendig und umständlich, da einerseits zwei Vorlagen erforderlich sind und die jeweilige Zuordnung der Texte zu den entsprechenden Stellen des graphischen Musters Schwierigkeiten bereiten könnte.

Der Erfindung liegt daher die Aufgabe zugrunde, ein Verfahren zum Erfassen von mit graphischen Mustern und Zeichen versehenen Vorlagen anzugeben, das einen geringen Aufwand erfordert und das eine eindeutige Zuordnung zwischen den graphischen Mustern und den Texten sicherstellt.

Erfindungsgemäss wird die Aufgabe bei dem Verfahren der eingangs genannten Art gelöst durch die zeitliche Aufeinanderfolge der im kennzeichnenden Teil des Patentanspruchs 1 angegebenen Verfahrensschritte:

a) Die Zeichen werden auf der Vorlage mittels mindestens einer weiteren, von den vorgegebenen Farben verschiedenen Farbe dargestellt.

b) Während des Abtastens der Vorlage mittels der optoelektronischen Abtasteinrichtung werden beim Erkennen der weiteren, von den vorgegebenen Farben verschiedenen Farbe mittels einer Steuereinheit Sonderzeichen erzeugt und an den entsprechenden Stellen an der Ausgabeeinheit dargestellt.

c) Die Sonderzeichen werden durch mittels einer Tastatur eingegebene alphanumerische Textzeichen oder durch aus einem weiteren Speicher abgerufene graphische Elemente ersetzt.

Das Verfahren gemäss der Erfindung hat den Vorteil, dass die Abtasteinrichtung selbsttätig die Stellen erkennt, an denen zu einem späteren Zeitpunkt alphanumerische Textzeichen oder graphische Elemente eingetragen werden. Damit ist einerseits nur eine einzige Vorlage erforderlich und die Zuordnung zwischen den Texten oder graphischen Elementen und dem graphischen Muster ist sichergestellt.

Das Verfahren wird insbesondere dann in vorteilhafter Weise eingesetzt, wenn die graphischen Elemente in einem weiteren Speicher gespeichert sind. Derartige graphische Elemente sind beispielsweise Firmenzeichen oder Symbole, aus denen graphische Darstellungen zusammensetzbar sind.

Für eine eindeutige Zuordnung der Texte und der graphischen Muster kann gleichzeitig eine Wortlängenkontrolle durchgeführt werden, wenn die Zeichen in Graphikfeldern eingetragen werden, aus denen das graphische Muster aufgebaut ist.

Falls die graphischen Muster in bekannter Weise in den für das System «Bildschirmtext» üblichen acht Farben, einschliesslich schwarz und weiss dargestellt werden, ist es vorteilhaft, wenn die Zeichen durch fliederähnliche und/oder hellbraune Farben dargestellt werden.

Eine vorteilhafte Anordnung zur Durchführung des Verfahrens, bei der eine optoelektronische Abtasteinrichtung vorgesehen ist, die eine mit einem graphischen Muster und diesem zugeordneten Zeichen versehene Vorlage abtastet, wobei die graphischen Muster in vorgegebenen Farben dargestellt sind, ist dadurch gekennzeichnet, dass die Vorlage die dem graphischen Muster zugeordneten Zeichen in einer weiteren Farbe aufweist, dass der Abtasteinrichtung eine Steuereinheit nachgeschaltet ist, die beim Auftreten der weiteren Farbe ein Sonderzeichen erzeugt und einen Speicher enthält, in dem die Sonderzeichen speicherbar sind und dass an der Steuereinheit eine Ausgabeeinheit, an der die graphischen Muster und die Zeichen darstellbar sind und eine Tastatur angeschlossen ist, mittels der die alphanumerischen Textzeichen eingebbar sind.

Falls als Zeichen vereinbarte graphische Elemente vorgesehen sind, ist es vorteilhaft, wenn die Steuereinheit einen weiteren Speicher enthält, in dem die graphischen Elemente gespeichert sind.

Für das nachträgliche Ersetzen der Sonderzeichen durch die Textzeichen oder graphische Muster ist es vorteilhaft, wenn als Ausgabeeinheit ein Bildschirm einer Farbbildröhre vorgesehen ist.

Im folgenden wird eine Durchführung des Verfahrens gemäss der Erfindung anhand von Zeichnungen näher erläutert.

Es zeigen:

Fig. 1 ein Blockschaltbild der Anordnung zur Durchführung des Verfahrens,

Fig. 2 eine Darstellung der abzutastenden Vorlage,

Fig. 3 eine Darstellung der an der Ausgabeeinheit dargestellten Vorlage nach der Abtastung,

Fig. 4 eine Darstellung der an der Ausgabeeinheit dargestellten, redigierten Vorlage.

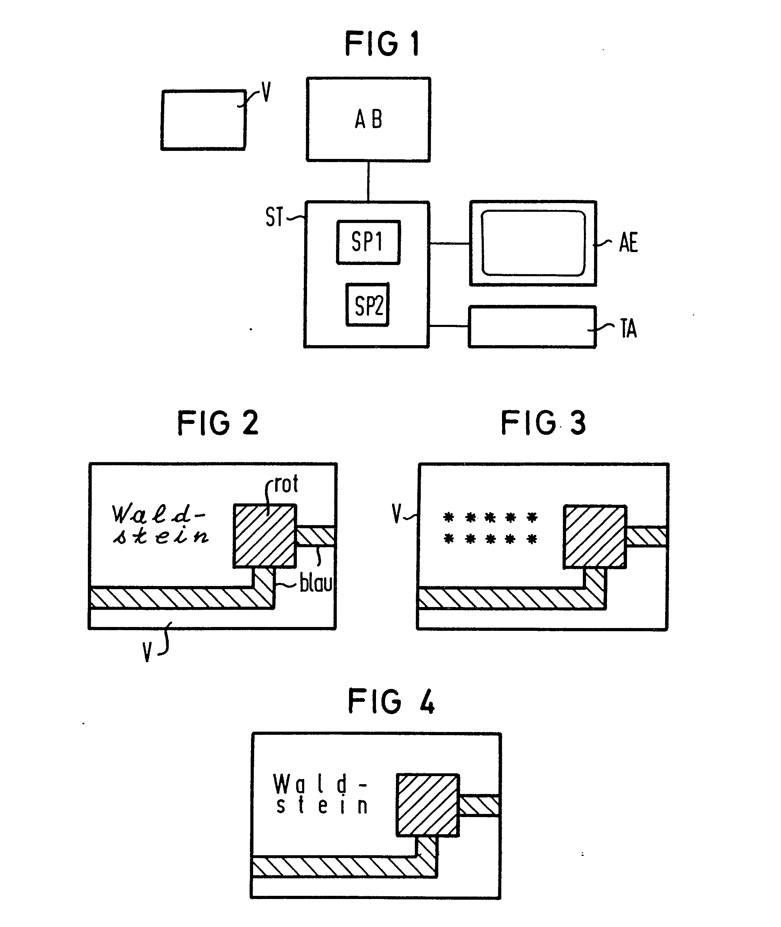

Bei der in Fig. 1 dargestellten Anordnung wird eine mit graphischen Mustern und Zeichen versehene Vorlage V mittels einer optoelektronischen Abtasteinrichtung AB linienweise abgetastet. Die graphischen Muster können auf der Vorlage mit den acht Farben rot, grün, blau, cyan, magenta, gelb, weiss und schwarz dargestellt sein. Die Abtasteinrichtung ist als Farbabtasteinrichtung ausgebildet und erkennt diese vorgegebenen acht Farben. Der Abtasteinrichtung AB ist eine Steuereinheit ST nachgeschaltet, die die von der Abtasteinrichtung AB abgegebenen Signale verarbeitet. Die Steuereinheit ST kann einen Speicher SP1 enthalten, in dem Codezeichen speicherbar sind, die die Form und die Farbe der abgetasteten graphischen Muster darstellen. An der Steuereinheit ST ist eine Ausgabeeinheit AE angeschlossen, an der die abgetasteten graphischen Muster darstellbar sind. Diese Ausgabeeinheit AE ist beispielsweise ein Bildschirmgerät mit einer Farbbildröhre oder ein Mehrfarbendrucker. An der Steuereinheit ST ist weiterhin eine Tastatur TA angeschlossen, mit der einfache graphische Muster und alphanumerische Zeichen eingebbar sind. Weitere Einzelheiten der Anordnung werden zusammen mit den Darstellungen in den Fig. 2–4 beschrieben.

In Fig. 2 ist ein Beispiel eines abzutastenden graphischen Musters auf der Vorlage V dargestellt. Das graphische Muster soll beispielsweise Wanderwege darstellen. Ausser der Beschriftung «Waldstein» sind die graphischen Muster in jeweils einer der acht vorgegebenen Farben dargestellt. Die Beschriftung «Waldstein» ist in einer von den acht vorgegebenen Farben verschiedenen weiteren Farbe, beispielsweise einer fliederähnlichen oder hellbraunen Farbe handschriftlich eingetragen. Die Darstellung des graphischen Musters ist an vorgegebene Graphikfelder gebunden, die durch die Abtasteinrichtung AB linienweise abgetastet werden. Vorteilhafterweise werden auch die Zeichen der Beschriftung «Waldstein» in diese vorgegebenen Graphikfelder eingetragen.

Wie in Fig. 3 dargestellt ist, erkennt die mit der Abtasteinrichtung AB verbundene Steuereinheit ST die unzulässige Farbe und erzeugt Sonderzeichen, beispielsweise Sterne und stellt diese an der Ausgabeeinheit AE dar. Gleichzeitig können diese Sonderzeichen im Speicher SP1 der Steuereinheit ST codiert eingespeichert werden.

Wie in Fig. 4 dargestellt ist, werden nach der Abtastung mittels der Tastatur die Sonderzeichen durch die entsprechenden Textzeichen ersetzt. Da die Anzahl der Sonderzeichen mit der Anzahl der Textzeichen übereinstimmen muss, erfolgt hier gleichzeitig eine Wortlängenüberprüfung.

Die Sonderzeichen können auch durch graphische Elemente ersetzt werden, die in einem weiteren Speicher SP2 in der Steuereinheit ST gespeichert sind. Die Textzeichen werden dann in einer neunten Farbe, beispielsweise der fliederähnlichen Farbe dargestellt, während die graphischen Elemente in einer zehnten Farbe, beispielsweise der hellbraunen Farbe dargestellt werden. Derartige graphische Elemente sind beispielsweise Firmenzeichen oder Symbole, aus denen umfangreichere graphische Darstellungen erzeugbar sind. Diese graphischen Elemente können beispielsweise Schaltbilder von elektronischen Bauelementen sein, aus denen elektronische Schaltungen darstellbar sind.

## Patentansprüche

1. Verfahren zum Erfassen einer mit einem graphischen Muster und zugeordneten Zeichen versehenen Vorlage, bei dem die graphischen Muster in vorgegebenen Farben auf die Vorlage dargestellt sind, bei dem die Vorlage mittels einer optoelektronischen Abtasteinrichtung abgetastet wird, und bei dem die graphischen Muster und Zeichen an einer Ausgabeeinheit darstellbar sind und in einem Speicher speicherbar sind, gekennzeichnet durch die zeitliche Aufeinanderfolge folgender Verfahrensschritte:

a) Die Zeichen werden auf der Vorlage (V) mittels mindestens einer weiteren, von den vorgegebenen Farben verschiedenen Farbe dargestellt.

b) Während des Abtastens der Vorlage (V) mittels der optoelektronischen Abtasteinrichtung (AB) werden beim Erkennen der weiteren, von den vorgegebenen Farben verschiedenen Farbe mittels einer Steuereinheit (ST) Sonderzeichen erzeugt und an den entsprechenden Stellen an der Ausgabeeinheit (AE) dargestellt.

c) Die Sonderzeichen werden durch mittels einer Tastatur (TA) eingegebene alphanumerische Textzeichen oder durch aus einem weiteren Speicher (SP2) abgerufene graphische Elemente ersetzt.

2. Verfahren nach Anspruch 1, dadurch gekennzeichnet, dass die Zeichen in Graphikfelder eingetragen werden, aus denen das graphische Muster aufgebaut ist.

3. Verfahren nach Anspruch 1 oder 2, dadurch gekennzeichnet, dass die Zeichen durch fliederähnliche und/oder hellbraune Farben dargestellt werden.

4. Anordnung zur Durchführung des Verfahrens nach Anspruch 1, bei der eine optoelektronische Abtasteinrichtung (AB) vorgesehen ist, die eine mit einem graphischen Muster und diesem zugeordneten Zeichen versehene Vorlage (V) abtastet, wobei die graphischen Muster in vorgegebenen Farben dargestellt sind, dadurch gekennzeichnet, dass die Vorlage (V) die dem graphischen Muster zugeordneten Zeichen in einer weiteren Farbe aufweist, dass der Abtasteinrichtung (AB) eine Steuereinheit (ST) nachgeschaltet ist, die beim Auftreten der weiteren Farbe ein Sonderzeichen erzeugt und einen Speicher (SP1) enthält, in dem die Sonderzeichen speicherbar sind und dass an der Steuereinheit (ST) eine Ausgabeeinheit (AE), an der die graphischen Muster und die Zeichen darstellbar sind und eine Tastatur (TA) angeschlossen ist, mittels der die alphanumerischen Textzeichen eingebbar sind.

5. Anordnung nach Anspruch 4, dadurch gekennzeichnet, dass die Steuereinheit (ST) einen weiteren Speicher (SP2) enthält, in dem die graphischen Elemente gespeichert sind.

6. Anordnung nach Anspruch 4 oder Anspruch 5, dadurch gekennzeichnet, dass als Anzeigeeinheit (AE) ein Bildschirm einer Farbbildröhre vorgesehen ist.

**Claims**

1. A method for memorising an original which is provided with a graphic model and assigned characters, wherein the graphic models are illustrated on the original in predetermined colours, wherein the original is scanned by means of an opto-electronic scanning device, and wherein the graphic models and characters can be illustrated on an output unit and stored in a store, characterised by the time-wise succession of the following method steps:

a) the characters are illustrated on the original (V) by means of at least one further colour which is different from the predetermined colours.
b) when the original (V) is scanned by means of the opto-electronic scanning device (AB) special characters are produced by means of a control unit (ST) upon recognition of the further colour, which is different from the predetermined colours, and illustrated at the corresponding points on the output unit (AE).
c) the special characters are replaced by alphanumeric text characters which are input by means of a keyboard (TA), or by graphic elements which are called up from a further store (SP2).

2. A method as claimed in claim 1, characterised in that the characters are entered into graphic fields, of which the graphic model is composed.

3. A method as claimed in claim 1 or 2, characterised in that the characters are illustrated in lilac and/or lightbrown colours.

4. An arrangement for the implementation of the method as claimed in claim 1, wherein is arranged an opto-electronic scanning device (AB) which scans an original (V) which is provided with a graphic model and characters assigned thereto, where the graphic models are illustrated in predetermined colours, characterised in that the original (V) shows the characters, which are assigned to the graphic model, in a further colour, that the scanning device (AB) is followed by a control unit (ST), which on occurrence of the further colour produces a special character and comprises a store (SP1), in which the special characters can be stored, and that an output unit (AE), on which the graphic models and the characters can be illustrated, and a keyboard (TA), by means of which the alphanumeric text characters can be input, are connected to the control unit (ST).

5. An arrangement as claimed in claim 4, characterised in that the control unit (ST) comprises a further store (SP2), in which the graphic elements are stored.

6. An arrangement as claimed in claim 4 or claim 5, characterised in that a screen of a colour picture tube is provided as a display unit (AE).

**Revendications**

1. Procédé pour réaliser la mémorisation d'un modèle comportant un dessin graphique et des caractères associés, selon lequel les dessins graphiques sont représentés avec des couleurs prédéterminées selon le modèle, et selon lequel le modèle est exploré à l'aide d'un dispositif d'exploration opto-électronique, et selon lequel les dessins graphiques et les caractères peuvent être représentés sur une unité de sortie et peuvent être mémorisés dans une mémoire, caractérisé par la succession temporelle des phases opératoires suivantes:

a) les caractères sont représentés, sur le modèle (V), à l'aide d'au moins une autre couleur différente des couleurs prédéterminées;
b) pendant l'exploration du modèle (V) à l'aide du dispositif d'exploration opto-électronique (AB), des caractères particuliers sont produits au moyen d'une unité de commande (ST) lors de l'identification de l'autre couleur différente des couleurs prédéterminées, et sont représentés aux emplacements correspondants sur l'unité de sortie (AE);
c) les caractères particuliers sont remplacés par des caractères de texte alphanumériques insérés à l'aide d'un clavier (TA) ou par des éléments graphiques appelés hors d'une autre mémoire (SP2).

2. Procédé suivant la revendication 1, caractérisé par le fait que les caractères sont insérés dans des zones graphiques, dont est constitué le dessin graphique.

3. Procédé suivant la revendication 1 ou 2, caractérisé par le fait que les caractères sont réalisés avec des couleurs semblables à la couleur lilas et/ou avec des couleurs marron clair.

4. Dispositif pour la mise en œuvre du procédé selon la revendication 1, dans lequel il est prévu un dispositif d'exploration opto-électronique (AB) qui explore un modèle (V) comportant des dessins graphiques et des caractères associés à ce dessin, les dessins graphiques étant représentés avec des couleurs prédéterminées, caractérisé par le fait que le modèle (V) contient les caractères associés au dessin graphique, représentés en une autre couleur, qu'en aval du dispositif d'exploration (AB) est branchée une unité de commande (ST) qui produit un caractère particulier lors de l'apparition d'une autre couleurs et contient une mémoire (ST), dans laquelle les caractères particuliers peuvent être mémorisés, et qu'à l'unité de commande (ST) se trouvent raccordés une unité de sortie (AE), sur laquelle les dessins graphiques et les caractères peuvent être représentés, et un clavier (TA) à l'aide duquel les caractères de texte alphanumériques peuvent être introduits.

5. Dispositif suivant la revendication 4, caractérisé par le fait que l'unité de commande (ST) contient une autre mémoire (SP2), dans laquelle les éléments graphiques sont mémorisés.

6. Dispositif suivant la revendication 4 ou la revendication 5, caractérisé par le fait qu'un écran d'un tube-image en couleurs est prévu en tant qu'unité d'affichage (AE).

# FIG 1

# FIG 2

# FIG 3

# FIG 4